# EUROPEAN PATENT APPLICATION

(11) **EP 3 252 957 A1**
(43) Date of publication of application: **06.12.2017**
(21) Application number: 15734998.6
(22) Date of filing: 29.01.2015
(51) Int. Cl.: H04B 1/38, E02F 9/00, G06K 7/10, H04B 5/02

(54) **SYSTEM FOR ACQUIRING IDENTIFICATION INFORMATION, AND INDUSTRIAL VEHICLE**

(71) Applicant: Komatsu Ltd., Minato-ku Tokyo 107-8414 (JP)
(72) Inventor: KOSHI Takayuki, Hiratsuka-shi Kanagawa 254-8555 (JP)
(74) Representative: Grünecker Patent- und Rechtsanwälte PartG mbB
(86) International application number: PCT/JP2015/052459
(87) International publication number: WO 2015/105203

(57) **Abstract**

An identification information acquisition system includes: an identification device (30) that is attached to a target component and stores identification information of the target component; and a first communication device (15A) and a second communication device (15B) that wirelessly communicate with the identification device (30). The second communication device (15B) holds and transmits the identification information acquired by the second communication device (15B) as second-communication-device acquisition information The first communication device (15A) includes: a first-communication-device holder (155) that holds the identification information acquired by the first communication device (15A) and the received second-communication-device acquisition information as first-communication-device acquisition information and a first-communication-device judging unit (156) that judges whether or not the identification information having the same contents is contained in the first-communication-device acquisition information When the first-communication-device judging unit (156) judges that the identification information having the same contents is contained in the first-communication-device acquisition information the first-communication-device holder (155) merges the identification information judged to have the same contents.

## Description

### TECHNICAL FIELD

The present invention relates to an identification information acquisition system and a working vehicle provided with the identification information acquisition system.

### BACKGROUND ART

A construction machine (e.g., a hydraulic excavator and a wheel loader), a delivery vehicle (e.g., a dump truck) and the like are typically known as a working vehicle. There is known technology of attaching an IC chip (identification part) to a replacement part (e.g., a filter) installed in such a working vehicle, reading information stored in the IC chip using a sensor, and identifying the replacement part as a genuine part or an imitation (see, for instance, Patent Literature 1).

In a replacement parts identification device disclosed in Patent Literature 1, the IC chip (identification part) is embedded in a genuine replacement part warranted by a manufacturer of a construction machine and a reader (sensor) is positioned so as to detect needed information stored in the IC chip. When an abnormality detection signal to be outputted when the needed information is not detected is outputted from the sensor, a controller stops an operation of an engine and/or displays an alarm message on a monitor.

When a signal indicating replacement by another genuine filter is outputted from the sensor, the controller stores an attachment timing of the filter and calculates a next replacement timing to notify an operator of the replacement timing. Further, the controller stores presence or absence of the replacement of the genuine filter and the number of times of the replacement.

### CITATION LIST

### PATENT LITERATURE(S)

Patent Literature 1: JP-A-2005-273196

### SUMMARY OF THE INVENTION

### PROBLEM(S) TO BE SOLVED BY THE INVENTION

In some cases, a plurality of IC tags each including a chip are provided to a single working vehicle. Such an instance where a plurality of IC tags each including a chip are provided to a single working vehicle is exemplifed by an instance where an IC tag is attached to each of a plurality of replacement parts (e.g., filter) and an instance where two or more IC tags are attached to each of the replacement parts. In such instances, the IC tag(s) are possibly disposed out of a communication range of a reader that reads information from the IC tag(s). Particularly, since a relatively large component (e.g., engine) is disposed in the working vehicle, electric waves outputted from the IC chips toward the reader are likely to be blocked by such a component to narrow the above communication range. Moreover, the electric waves outputted from the IC chips toward the reader may not be received by the reader since the electric waves are reflected on metal parts and the like within the working vehicle. Accordingly, in some cases, information from the plurality of IC tags cannot be appropriately acquired by a single reader. To cope with this problem, a plurality of readers may be provided and the readers each acquire information from IC tags. Note that the IC tag is referred to as an identification device as needed in the following description.

When the plurality of readers are provided in the working vehicle, communication ranges of some of the plurality of readers may overlap with each other. In this instance, the plurality of readers may simultaneously acquire information from a single identification device. Accordingly, the acquired information contains overlapping information, so that it is necessary to organize the information acquired by the readers. In order to do so, a processor for obtaining necessary information needs to be provided. Parts management such as management of a replacement history of replacement parts (e.g., filter) and estimation of a next replacement timing can be conducted by reliably acquiring information stored in the identification device and appropriately managing parts information including the acquired identification information. Accordingly, the information acquired by the readers needs to be accurately processed

An object of the invention is to provide an identification information acquisition system and a working vehicle which are capable of acquiring identification information.

### MEANS FOR SOLVING THE PROBLEM(S)

According to a first aspect of the invention, an identification information acquisition system includes: an identification device that is attached to a target component and stores identification information of the target component; and a first communication device and a second communication device that wirelessly communicate with the identification device, in which the second communication device includes: a second-communication-device holder that holds the identification information acquired by the second communication device as second-communication-device acquisition information; and a second-communication-device transmitter that transmits the second-communication-device acquisition information to the first communication device, and the first communication device includes: a first-communication-device holder that holds the identification information acquired by the first communication device and the second-communication-device acquisition information received from the second communication device as first-communication-device acquisition information; and a first-communication-device judging unit that judges whether or not the identification information having the same contents is contained in the first-communication-device acquisition information, and the first-communication-device holder merges the identification information judged to have the same contents when the first-communication-device judging unit judges that the identification information having the same contents is contained in the first-communication-device acquiring information.

For instance, when the identification information acquisition system according to the above aspect of the invention is applied to a working vehicle, the target component is exemplified by replacement parts (various filters) and devices requiring maintenance, which are provided to the working vehicle.

The communication devices acquire identification information of identification devices existing in the respective communication ranges of the communication devices. Here, the communication range indicates a range in which electric waves outputted from the communication device can reach the identification device and the communication device can receive response signals outputted from the identification device based on the outputted electric waves.

Further, an instance where the identification information having the same contents is contained in the acquired information is exemplified by an instance where identification information stored in a single identification device is acquired by a plurality of communication devices and an instance where a single communication device acquires identification information from a plurality of identification devices of a single identification device.

Moreover, merging of the identification information having the same contents indicates leaving one of a plurality of identification information judged to have the same contents while deleting the rest of the plurality of identification information.

In the above aspect of the invention, when it is judged that the identification information having the same contents is contained in the first-communication-device acquisition information containing the identification information acquired by the first communication device from the identification device and the second-communication-device acquisition information (identification information acquired by the second communication device) received from the second communication device, the identification information having the same contents is merged. In other words, when the first communication device and the second communication device acquire the identification information having the same contents from the same identification device, the identification information having the same contents is contained in the first-communication-device acquiring information. Also when a single identification device has a plurality of identifcation parts and at least one of the first communication device and the second communication device acquires the identification information having the same contents from the plurality of identification parts, the identification information having the same contents is contained in the first-communication-device acquiring information. In such instances, the identification information having the same contents in the first-communication-device acquisition information is merged.

With this arrangement, for instance, the first-communication-device acquisition information to be outputted from the first communication device can be prevented from containing the identification information having the same contents. Accordingly, when the identification information contained in the first-communication-device acquisition information is processed by the processor, a load on the processor is reducible. Additionally, since an information volume of the first-communication-device acquisition information is reducible, the information volume to be transmitted to the processor is reducible. In other words, the information volume to flow into the in-vehicle network is reducible and a delay in the processing of the processor are avoidable. Moreover, according to the above aspect of the invention, for instance, when the parts information including the identification information is outputted to an outside from the processor, a communication cost can be saved and a communication time can be shortened because of the reducible volume of the parts information.

In the identification information acquisition system according to the above aspect of the invention, preferably, the identification information contains type information indicating a type of the target component and unique information of the target component, and the first-communication-device judging unit judges that the identification information contains the same contents when at least one of the type information and the unique information is the same.

The type information is exemplified by a part number and a name that are set to the target component. The unique information is exemplified by a serial number unique to the target component.

When all the target components attached to a single working vehicle are of different types, the identification information of the identification devices respectively attached to the target components are different. In this case, it can be judged by comparing only the type information whether or not the first communication device and the second communication device acquire the identification information having the same contents.

Moreover, in the target components of the same type, when there is no possibility that the unique information is the same as the unique information stored in the identification device attached to the target component of a different type, it can be judged by comparing only the unique information whether or not the first communication device and the second communication device acquire the identification information having the same contents.

Further, when a plurality of target components of the same type are attached to a single working vehicle or when there is a possibility that unique information of the target components of different types are the same, the type information of the target components is the same while the unique information of the target components is the same. In such a case, the identification information may be judged to have the same contents. With this arrangement, the target components having the same type number and the same unique information are not supposed to exist. Accordingly, among the acquired identification information, overlapping of the identification information acquired from the same identification device and overlapping of the identification information acquired from a plurality of identification parts of the same identification device can be reliably judged. Accordingly, the identification information can be appropriately merged.

In the identification information acquisition system according to the above aspect of the invention, preferably, the second communication device includes a second-communication-device judging unit that judges whether or not the identification information having the same contents is contained in the second-communication-device acquisition information, and the second-communication-device holder merges the identification information judged to have the same contents when the second-communication-device judging unit judges that the identification information having the same contents is contained in the second-communication-device acquiring information.

With this arrangement, the second-communication-device holder holds the identification information acquired from the identification device by the second communication device as second-communication-device acquisition information The second-communication-device judging unit judges whether or not the identification information having the same contents is contained in the second-communication-device acquisition information When the second-communication-device judging unit judges that the identification information having the same contents is contained, the second-communication-device holder merges the identification information having the same contents. Accordingly, when the identification information having the same contents is acquired from a plurality of identification parts of a single identification device, the identification information having the same contents is merged and the merged second-communication-device acquisition information is transmitted to the first communication device. On the other hand, when it is judged that the identification information having the same contents is not contained, the held second-communication-device acquisition information is transmitted.

With this arrangement, the second-communication-device acquisition information to be outputted to the first communication device can be prevented from containing the identification information having the same contents. Accordingly, a load on the first communication device in processing the second-communication-device acquisition information is reducible. Additionally, since an information volume of the second-communication-device acquisition information is reducible, the information volume to be transmitted to the first communication device is reducible.

In the identification information acquisition system according to the above aspect of the invention, the identification device preferably includes a plurality of identification parts that store the identification information having the same contents.

With this arrangement, at least one of the identification devices has a plurality of identification parts that each store the identification information having the same contents. With this arrangement, even when one of the plurality of identification parts is not disposed in a suitable direction to the communication device depending on a layout of the target component and the identification device, the rest of the plurality of identification parts can be easily disposed to the communication device in a suitable direction. Accordingly, irrespective of the layout of the target component and the identification device, the identification parts and the communication device can easily communicate with each other, thereby facilitating acquisition of the identification information by the communication device.

Even when the identification information having the same contents is acquired from the plurality of identification parts of a single identification device as described above, since the identification information having the same contents is merged at least by the first communication device, information including the identification information having the same contents can be prevented from being transmitted to the processor and the like.

According to a second aspect of the invention, an identification information acquisition system includes: an identification device including a plurality of identification parts that store identification information having the same contents; and a communication device that wirelessly communicates with at least one of the plurality of identification parts of the identification device, in which the communication device includes: an information holder that holds the identification information acquired from one of the identification parts as acquired information; and an information judging unit that judges whether or not the identification information having the same contents is contained in the acquired information, and the information holder merges the identification information judged to have the same contents when the information judging unit judges that the identification information having the same contents is contained in the acquired information.

According to the second aspect of the invention, in the same manner as in the identification information acquisition system according to the first aspect of the invention, when it is judged that the identifcation information having the same contents acquired from the plurality of identification parts of the identification device is contained in the acquired information, the information holder outputs the acquired information in which the identification information having the same contents is merged. On the other hand, when it is judged that the identification information having the same contents is not contained, the information holder outputs the held acquired information.

With this arrangement, for instance, the acquired information to be outputted from the communication device can be prevented from containing the identification information having the same contents. Accordingly, when the identification information contained in the acquired information is processed, a load on the processor is reducible and an information volume of the acquired information is reducible, so that the information volume to be transmitted to the processor is reducible.

The identification information acquisition system according to the first and second aspects of the invention preferably further includes a processor that processes the identification information acquired from the identification device.

The processor processes the identification information transmitted from the first communication device and the identification information transmitted from the communication device. For instance, the processor compares previously-acquired identification information with the merged identification information and outputs identification information judged to be newly acquired.

Here, since the identification information transmitted from the first communication device and the communication device is provided by merging the identification information having the same contents, the information transmitted to the processor can be prevented from containing the identification information having the same contents. Accordingly, a load on the processor in processing the identification information is reducible.

According to a third aspect of the invention, a working vehicle includes the identification information acquisition system according to the above aspect of the invention.

According to the third aspect of the invention, the same advantages as those in the identification information acquisition systems according to the first and second aspects of the invention can be attained.

According to a fourth aspect of the invention, a working vehicle includes: a plurality of identification devices that are attached to a target component and store identification information of the target component; a plurality of communication devices that wirelessly communicate with the plurality of identification devices to acquire the identification information; and a processor that processes the identification information acquired by the plurality of identification devices, the plurality of communication devices including a first communication device and a second communication device, an operation of the second communication device being controlled by the first communication device, in which the second communication device includes: a second-communication-device holder that holds the identification information acquired by the second communication device of the plurality of identification devices as second-communication-device acquisition information; and a second-communication-device transmitter that transmits the second-communication-device acquisition information to the first communication device, and the first communication device includes: a first-communication-device holder that holds the identification information acquired from the identification devices by the first communication device of the plurality of identification devices and the second-communication-device acquisition information received from the second communication device as first-communication-device acquisition information; an information judging unit that judges whether or not the identification information having the same contents is contained in the first-communication-device acquisition information; and a first-communication-device transmitter that transmits the frst-communication-device acquisition information to the processor, the first-communication-device holder merges the identification information judged to have the same contents when the information judging unit judges that the identification information having the same contents is contained in the first-communication-device acquisition information, the first-communication-device transmitter transmits the merged identification information to the processor, and the processor compares previously-acquired identification information with the merged identification information and outputs identification information judged to be newly acquired.

According to the fourth aspect of the invention, the same advantages as those in the working vehicle having the identification information acquisition system according to the first aspect of the invention in the working vehicle according to the third aspect of the invention can be attained.

According to a fifth aspect of the invention, an identification information acquisition system includes: a working vehicle; and a management server capable of communicating with the working vehicle, the working vehicle including: a plurality of identification devices that are attached to a target component and store identification information of the target component; a plurality of communication devices that wirelessly communicate with the plurality of identification devices to acquire the identification information; and a processor, in which the plurality of identification devices include a first communication device and a second communication device, an operation of the second communication device being controlled by the first communication device, the second communication device includes: a second-communication-device holder that holds the identification information acquired from the identification devices by the second communication device as a second-communication-device acquisition information; and a second-communication-device transmitter that transmits the second-communication-device acquisition information to the first communication device, and the first communication device includes: a first-communication-device holder that holds the identification information acquired from the identification devices by the first communication device and the second-communication-device acquisition information received from the second communication device as first-communication-device acquisition information; and a first-communication-device transmitter that transmits the first-communication-device acquisition information to the processor, the processor outputs the first-communication-device acquisition information to the management server, and the management server judges whether or not the identification information having the same contents is contained in the first-communication-device acquisition information, and when the management server judges that identification information having the same contents is contained, the management server merges the identification information judged to have the same contents.

According to the fifth aspect of the invention, since the management server judges whether or not the identification information having the same contents is contained and the first communication device does not need to conduct such a judgment, a processing load on the first communication device is reducible.

### BRIEF DESCRIPTION OF DRAWING(S)

Fig. 1 is a perspective view showing a hydraulic excavator as a working vehicle according to an exemplary embodiment of the invention.
Fig. 2 is a schematic view showing an inside of a machine room.
Fig. 3 is a schematic view showing an inside of a pump room.
Fig. 4 is a schematic view showing a configuration of an IC tag.
Fig. 5 is a block diagram showing a configuration of the hydraulic excavator and an overall configuration of an identification information acquisition system.
Fig. 6 is a block diagram showing a configuration of a reader (master).
Fig. 7 is a block diagram showing a configuration of a reader (slave).
Fig. 8 is a flow chart showing an information collection process for acquiring identification information.
Fig. 9 is another flow chart showing an information acquisition process for acquiring identification information.
Fig. 10 is still another flow chart showing an information transmission process for acquiring identification information.
Fig. 11 is an illustration for describing the information collection process for acquiring identification information.
Fig. 12 is another illustration for describing the information collection process for acquiring identification information.
Fig. 13 is still another illustration for describing the information collection process for acquiring identification information.
Fig. 14 is a further illustration for describing the information collection process for acquiring identification information.

### DESCRIPTION OF EMBODIMENT(S)

An exemplary embodiment of the invention will be described below with reference to attached drawings.

### Description of Overall Hydraulic Excavator

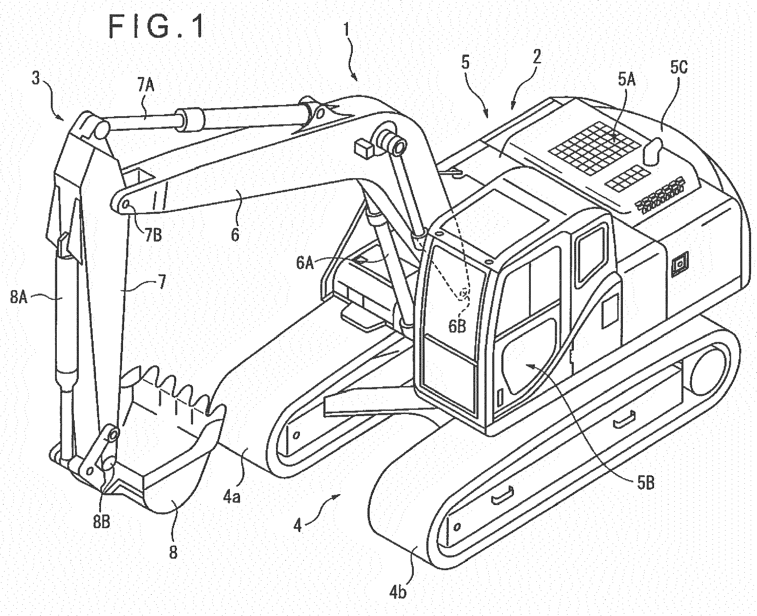

Fig. 1 is a perspective view showing a hydraulic excavator 1 as an example of a working vehicle in the exemplary embodiment.

In the exemplary embodiment, the hydraulic excavator 1 includes a vehicle body 2 and working equipment 3 as shown in Fig. 1. The vehicle body 2 includes an undercarriage 4 and an upper revolving body 5.

In the upper revolving body 5, a side where the working equipment 3 and a cab 5B are disposed is defined as a front and a side where a machine room 5A is disposed is defined as a back. A left side of the upper revolving body 5 facing the front is defined as a left and a right side of the upper revolving body 5 facing the front is defined as a right. In the hydraulic excavator I and the vehicle body 2, a side near the undercarriage 4 is defined as a bottom relative to the upper revolving body 5 while a side near the upper revolving body 5 is defined as a top relative to the undercarriage 4. When the hydraulic excavator I is disposed on a horizontal surface, the bottom is a side in a vertical direction, namely, a direction in which gravity acts, while the top is a side in a direction opposite the vertical direction.

In the exemplary embodiment, the hydraulic excavator 1 includes an internal combustion engine (e.g., a diesel engine) as a motive power generator. However, the motive power generator of the hydraulic excavator 1 is not limited to the internal combustion engine. For instance, the hydraulic excavator I may include the internal combustion engine, a generator motor and an electric storage device in combination (a so-called hybrid motive power generator). Alternatively, the hydraulic excavator 1 may include a motive power generator including a motor in place of the internal combustion engine.

### Machine Room

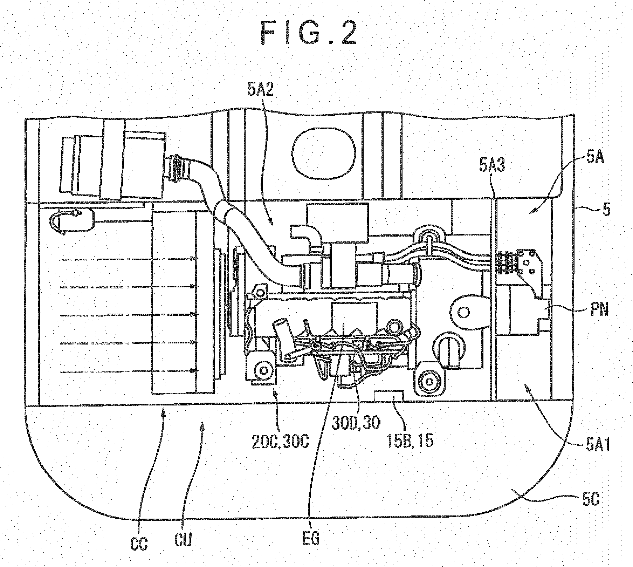

Fig. 2 is a schematic view showing the machine room 5A.

The upper revolving body 5 includes the machine room 5A, the cab 5B, and a counterweight 5C.

The machine room 5A is disposed at a first end (back side) of the upper revolving body 5. An inside of the machine room 5A is divided by a partition 5A3 into a pump room 5A1 and an engine room 5A2 as shown in Fig. 2. The pump room 5A1 is positioned on the right of the machine room 5A and the engine room 5A2 is positioned on the left of the machine room 5A, seen from the back.

### Engine Room

The engine room 5A2 contains an engine EG (motive power generator) and a cooling unit CU including a cooling core CC (e.g., radiator) and the like. The cooling unit CU is disposed adjacent to the engine EG and cools a cooling water flowing in the engine EG and a hydraulic fluid flowing in a hydraulic device (not shown).

The engine EG is disposed in a substantially sealed space defined by being surrounded by a partition in front of the counterweight 5C, a partition in front of the engine room 5A2, the partition 5A3 for separating the engine room 5A2 (left side) from the pump room 5A1 (right side), a door (not shown) on the left, a top plate including an engine hood disposed above the engine EG (not shown), and a bottom plate (not shown).

Further, in the engine room 5A2, a filter 20C (a fuel main filter), an identification device 30C, an identification device 30D attached to the engine EG, and a reader 15B that communicates with the identification devices 30C and 30D are provided. These components will be described in detail below.

The cab 5B is disposed at a second end (front side) of the upper revolving body 5 as shown in Fig. 1.

The counterweight 5C is provided on the farthest back side of the upper revolving body 5. The counterweight 5C is provided for weight balance with the working equipment 3 and is filled with weights. In other words, the machine room 5A is interposed between the cab 5B and the counterweight 5C.

The undercarriage 4 includes crawlers 4a and 4b. The undercarriage 4 is driven by a hydraulic motor (not shown) to rotate the crawlers 4a and 4b, whereby the hydraulic excavator 1 travels or is turned.

The working equipment 3 is attached to a lateral side of the cab 5B of the upper revolving body 5 and includes a boom 6, arm 7, bucket 8, boom cylinder 6A, arm cylinder 7A and bucket cylinder 8A. A base end of the boom 6 is jointed to a front of the vehicle body 2 through a boom pin 6B, whereby the boom 6 is movably attached. A base end of the arm 7 is jointed to a leading end of the boom 6 through an arm pin 7B, whereby the arm 7 is movably attached. The bucket 8 is jointed to a leading end of the arm 7 through a bucket pin 8B, whereby the bucket 8 is movably attached.

### Description of Pump Room

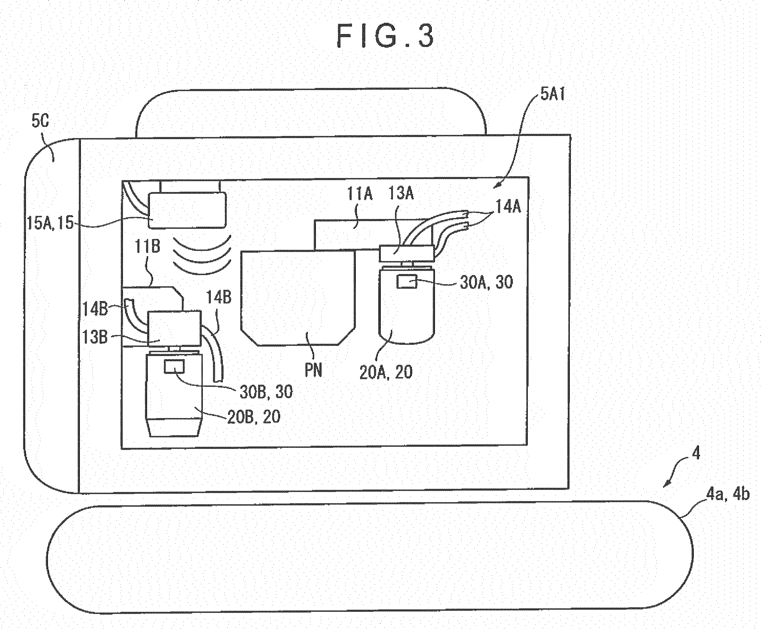

Fig. 3 is an illustration showing an inside of the pump room 5A1 with a door (not shown) opened from the right side of the upper revolving body 5. In other words, Fig. 3 is a schematic view showing a layout of filters 20A and 20B and a reader 15A in the pump room SA1.

The pump room 5A1 is disposed in a substantially sealed space defined by being surrounded by a door (not shown) on the right, the counterweight 5C, a partition in front of the pump room 5A1, the partition 5A3 for separating the pump room 5A1 from the engine room 5A2, the top plate (not shown) including the engine hood disposed above the engine EG, and the bottom plate (not shown).

The hydraulic pump PN is housed in the pump room 5A1 as shown in Fig. 3. The hydraulic pump PN is mechanically connected to the engine EG and is driven by driving the engine EG. The hydraulic pump PN discharges hydraulic fluid to a hydraulic device such as the above boom cylinder 6A.

Specifically, a bracket 11A, on which the hydraulic pump PN is provided, is provided in the pump room 5A1. A filter head 13A (filter holding part) is attached to the bracket 11A. A hose 14A is attached to the filter head 13A.

A filter head 13B is attached to the pump room 5A1 trough a bracket 11B. A fuel hose 14B is attached to the filter head 13B.

### Filter Head in Pump Room and Types of Filter

A filter 20A is attached to the flter head 13A. The filter 20A is an oil filter for the engine oil and eliminates dirt and the like contained in the engine oil flowing in the hose 14A.

The filter 20A is connected to the engine EG (see Fig. 2) through the hose 14A. The engine oil accumulated in the engine EG is pumped out of the engine EG to be transferred to the filter 20A. The engine oil after passing through the filter 20A is returned to the engine EG.

A filter 20B is attached to the filter head 13B. The filter 20B is a fuel pre-filter and eliminates dirt and the like contained in the fuel flowing in the fuel hose 14B. Note that the filter 20B is not a requisite for the hydraulic excavator 1. The hydraulic excavator 1 without the filter 20B is also usable.

The filter 20B (fuel pre-filter) is connected to a fuel tank (not shown) through the hose 14B. The fuel in the fuel tank (not shown) is transferred to the filter 20B. Subsequently, the fuel is transferred to the filter 20C (fuel main filter). After passing through the filter 20C, the fuel is transferred to a fuel injector (not shown). The fuel remaining in the fuel injector is returned to the fuel tank through a hose (not shown).

As described above, the filters 20A and 20B are provided in the pump room 5A1 while the filter 20C is provided in the engine room 5A2.

The filters 20 (20A, 20B, 20C) are parts requiring a regular replacement since a filter member inside the filters is clogged by use of the filters 20. Timing for the regular replacement is judged, for instance, based on accumulated operational duration shown by SMR (service meter) that measures operational duration of the engine in the hydraulic excavator 1, Such a judgment process is conducted, for instance, by a communication controller 200, a monitor 213 or a management server 111 which will be described below.

Identification devices 30A, 30B and 30C are respectively attached to the filters 20A, 20B and 20C. The identification device 30D is attached to the engine EG as described above. In other words, the filters 20A, 20B and 20C and the engine EG are target components to which the identification devices 30 (30A, 30B, 30C, 30D) are attached.

### Description of Identification Device

The identification devices 30 (30A, 30B, 30C, 30D) store and provide information relating to the target components (including devices such as the engine EG in addition to the replacement parts) to which the identification devices 30 are attached.

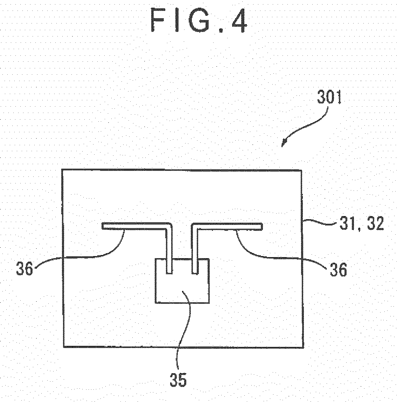

A passive type IC tag 301 that generates electric power by electromagnetic induction, microwaves and the like caused by electric waves outputted from the readers 15 (15A,15B) is usable as the identification devices 30A, 30B and 30C. In the exemplary embodiment, each of the identification devices 30A, 30B and 30C includes at least one of the IC tag 301 (identification part) (see Fig. 4). Accordingly, each of the identification devices 30A, 30B and 30C may include a single IC tag 301 or a plurality of IC tags 301.

The identification device 30D includes a single passive-type IC tag 301 described above. The IC tag 301 of the identification device 30D may be the same as or different from the IC tags 301 of the respective identification devices 30A, 30B and 30C in shape and configuration. The IC tag 301 of the identification device 30D at least includes an antenna 36 and an IC chip 35 which will be described below.

Since each of the identification devices 30 thus includes the passive type IC tags 301, an internal battery is unnecessary, so that a cost is reducible and operation failure caused by a run-out battery is preventable.

### Description of IC Tag

Fig. 4 is a schematic view showing a configuration of the IC tag 301.

The IC tag 301 is an RFID (Radio Frequency Identification) tag in which the IC chip 35 and the internal antenna 36 are encapsulated with package materials 31 and 32.

The IC tag 301 of the exemplary embodiment can communicate in a communication frequency zone, namely, a UHF (ultrahigh frequency) zone, specifically, in a zone of 860 MHz to 960 MHz. The communication frequency zone of the RFID tag may be a zone other than the above zone.

The IC chip 35 is connected to the antenna 36. A shape and a size of the antenna 36 are set so that the antenna 36 can communicate with the readers 15A and 15B. The IC chip 35 and the antenna 36 are held between the package materials 31 and 32. Fig. 4 is an illustration with the package material 31 being seen through. The IC tag 301 is attached to each of the filters 20A, 20B and 20C and the engine EG with a bonding member such as a double-sided adhesive tape or an adhesive agent.

The IC chip 35 stores parts information (tag information) including a code for identifying an IC chip 35 (TID: Tag Identifier) and a code for identifying a part (e.g., filter 20 and engine EG) to which each of the identification devices 30 is attached (EPC: Electronic Product Code).

Among the above codes, EPC stores identification information including a part name identification number for identifying a name of a part, a part number (as type information) for specifying a type of the part to which each of the identification devices 30 is attached, a manufacturing date, a serial number (manufacturing number) (as unique information) for specifying each of parts having the same part number, and a supplier code showing a manufacturer of the part. The part name identification number is used for identifying the parts such as the engine oil filter, fuel pre-filter and fuel main filter. For instance, an individual number is allocated to each of the parts as the part name identifcation number. When the part is the engine EG, an individual number allocated to the engine may be defined as the part name identification number. Moreover, when the part is the engine EG, the identification information includes, for instance, the number of times of overhaul of the engine EG.

### Description of Reader

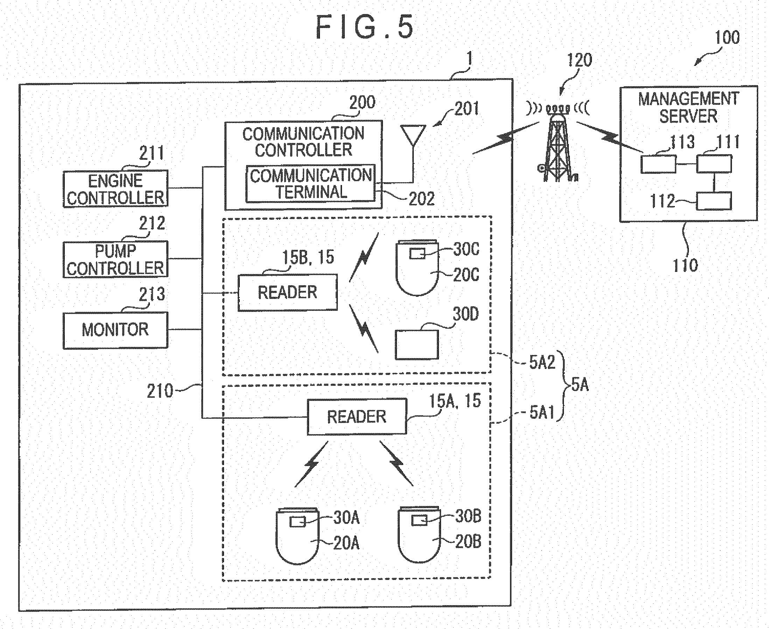

Fig. 5 is a block diagram showing a configuration of the hydraulic excavator and an overall configuration of an identification information acquisition system 100 including the hydraulic excavator 1 in the exemplary embodiment.

The readers 15 (15A, 15B), which are communication devices to communicate with the identification devices 30A, 30B, 30C and 30D, are attached to the machine room 5A as shown in Fig. 5. The readers 15 read out parts information including the identification information (hereinafter, also simply referred to as "data") stored in the respective IC tags 301 of the identification devices 30A, 30B, 30C and 30D. In the exemplary embodiment, the readers 15 each have a reading function. However, the readers 15 each may be replaced by a reader-writer having a writing function in addition to the reading function.

The reader 15A corresponds to a first communication device in the exemplary embodiment and is provided to the pump room 5A1. The reader 15A communicates with the identification devices 30A and 30B respectively attached to the filters 20A and 20B and supposed to be positioned within a communication range of the reader 15A, under the control by the communication controller 200. The reader 15A reads out the parts information from the identification devices 30A and 30B assuming that the parts information is readable. Further, the reader 15A controls an operation of the reader 15B. In other words, the reader 15A corresponds to the first communication device in the exemplary embodiment and serves as the master reader. The reader 15B corresponds to a second communication device in the exemplary embodiment and serves as the slave reader controllable by the master reader. The reader 15B reads out the parts information from the identification devices 30C and 30D assuming that the parts information is readable. Note that the communication range of the reader 15A indicates a range in which electric waves outputted from the reader 15A can reach the identification devices 30 and the reader 15A can receive response signals outputted from the identification devices 30 in response to the outputted electric waves. The same description is applied to a communication range of the reader 15B.

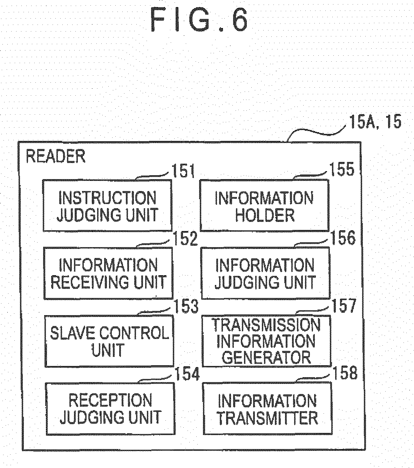

Fig. 6 is a block diagram showing a configuration of the reader 15A serving as the master reader.

As shown in Fig. 6, the reader 15A includes an instruction judging unit 151, information receiving unit 152, slave control unit 153, reception judging unit 154, information holder 155, information judging unit 156, transmission information generator 157 and information transmitter 158.

The instruction judging unit 151 judges whether or not instruction information of acquiring the parts information stored in the identification devices 30 is inputted from the communication controller 200 described below.

When the instruction judging unit 151 judges that the instruction information is inputted, the information receiving unit 152 outputs the electric waves to the identification devices 30 for a predetermined time and receives the electric waves outputted from the identification devices 30.

The slave control unit 153 controls the operation of the reader 15B serving as the slave reader. For instance, the slave control unit 153 outputs the same instruction information as the above instruction information to the reader 15B.

The reception judging unit 154 judges whether or not the electric waves including the parts information stored in the identification devices 30 are received from the identifcation devices 30 based on the electric waves received by the information receiving unit 152. Moreover, the reception judging unit 154 judges whether or not the reader 15B is normally operated by judging whether or not the reception judging unit 153 receives the parts information from the reader 15B within a predetermined time elapsed after the instruction information is outputted from the slave control unit 153.

The information holder 155 corresponds to a first-communication-device holder of the invention. When the reception judging unit 154 judges that the parts information is received from the identification devices 30 based on the electric waves outputted from the information receiving unit 152 and when the reception judging unit 154 judges that the parts information of the identification devices 30 is received from the reader 15 (15B) serving as the slave reader, the information holder 155 holds both of the above parts information as master acquisition information (acquisition information of the first communication device). In other words, as the master acquisition information, the information holder 155 holds the parts information received from the identification devices 30A and 30B that are target components of which parts information are supposed to be acquired by the reader 15A and the parts information to be supposed to be acquired by the reader 15B, namely, slave acquisition information (second-communication-device acquiring information) including the parts information of the identification devices 30C and 30D acquired by the reader 15B.

The information judging unit 156 judges whether or not the slave acquisition information, which is contained in the master acquisition information and held by the information holder 155, contains error information.

Moreover, the information judging unit 156 executes an overlapping judgment process of judging whether or not the parts information having the same contents is included in the held master acquisition information. In other words, the information judging unit 156 corresponds to a first-communication-device judging unit of the invention.

In the exemplary embodiment, the information judging unit 156 judges the parts information at least having the same part number and the same serial number to be the parts information having the same contents (parts information having identification information having the same contents). However, even when all of the identification devices 30A, 30B, 30C and 30D provided to the hydraulic excavator 1 have different part numbers (type information), as long as the type information has the same parts information about the part numbers read by the reader 15A or the reader 15B, the information judging unit 156 may judge the type information to be the parts information having the same contents (parts information having identification information having the same contents). Moreover, even when all of the identification devices 30A, 30B, 30C and 30D provided to the hydraulic excavator 1 have different serial numbers (unique information), as long as the unique information has the same parts information about the serial numbers read by the reader 15A or the reader 15B, the information judging unit 156 may judge the unique information to be the parts information having the same contents (parts information having identification information having the same contents).

Each of the identification devices 30A, 30B and 30C includes at least single IC tag 301. One of the readers 15 occasionally receives the parts information from the plurality of identification devices 30A, 30B and 30C, or the parts information from the identification device 30D, depending on the location of the IC tags 301. In other words, each of the readers 15 occasionally receives the parts information having different contents from the IC tags 301 of the identification devices 30.

On the other hand, a plurality of readers 15 (15A, 15B), which are disposed at different positions, occasionally receive the parts information from a single one of the identification devices 30, depending on positions where the identification devices 30 are provided.

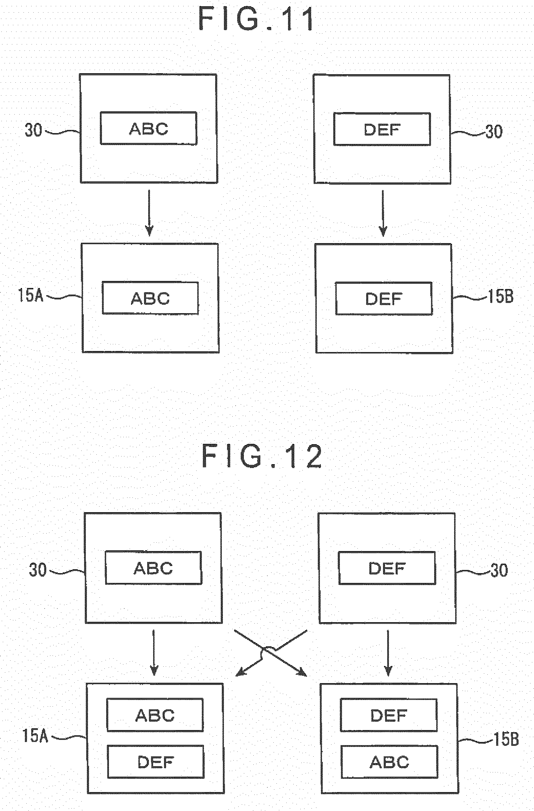

Accordingly, as described later with reference to Figs. 11 to 14, for instance, one of the readers 15 may receive the parts information from a single IC tag 301 of one of the identification devices 30, or alternatively, the plurality of readers 15 each may receive the parts information having the same identification information from the single IC tag 301 of the single identification devices 30. In other words, depending on communication conditions between the readers 15 and the identification devices 30, the readers 15 occasionally receive the parts information from an identification device different from the identification device(s) 30 supposed to be positioned within the communication range of each of the readers 15.

To cope with this problem, when the information judging unit 156 judges that the parts information having the same contents is contained in the master acquisition information, the information holder 155 executes an organizing process (merging process) of deleting the parts information having the same contents except for one of those to organize the parts information having the same contents.

Accordingly, the master acquisition information held by the information holder 155 does not contain the parts information having the same contents. Although the information holder 155 deletes the parts information judged to have the same contents except for one of those in the exemplary embodiment, instead of being deleted, the parts information judged to have the same contents may be excluded from transmission information generated by the transmission information generator 157.

The transmission information generator 157 generates the transmission information including the master acquisition information held by the information holder 155. When the information judging unit 156 judges the parts information to have the same contents, the transmission information generator 157 generates the transmission information including the organized master acquisition information.

When the reception judging unit 154 judges that the parts information of the identification devices 30A and 30B are not acquired, the transmission information generator 157 generates error information (operational information) including information indicating the reader 15 (15A) and information indicating an operational state of the reader 15 (information indicating that communication between the reader 15 and the identification devices 30 is failed).

Further, when the reception judging unit 154 judges that the information from the reader 15B serving as the slave reader is not received within a predetermined time (i.e., when it is judged that the reader 15B is not normally operated), the transmission information generator 157 generates error information (operational information) including information indicating the reader 15 (15B) and information indicating an operational state of the reader 15 (information indicating that the reader 15B is not normally operated).

In addition, when the information judging unit 156 judges that the error information is contained in the information (slave acquisition information) received from the reader 15 (15B) serving as the slave reader, the transmission information generator 157 generates error information to be transmitted to the communication controller 200 based on the acquired error information. The information indicating the reader 15 (15B) as a transmission source and the information indicating the operation state of the reader 15 (information indicating that communication between the reader 15 and the identification devices 30 is failed), which are contained in the acquired error information, are to be transmitted as the error information to the communication controller 200.

The information transmitter 158 transmits the transmission information or the error information generated by the transmission information generator 157 to the communication controller 200 described later. In other words, the information transmitter 158 corresponds to a first-communication-device transmitter of the invention.

The reader 15B corresponds to the second communication device in the exemplary embodiment and is provided to the engine room 5A2. The reader 15B is supposed to communicate with the identification device 30C attached to the filter 20C and the identification device 30D attached to the engine EG. Specifically, the reader 15B communicates with the identification devices 30C and 30D supposed to be positioned within the communication range of the reader 15B. The reader 15B executes a process of reading the parts information from the identification devices 30C and 30D under control by the reader 15A.

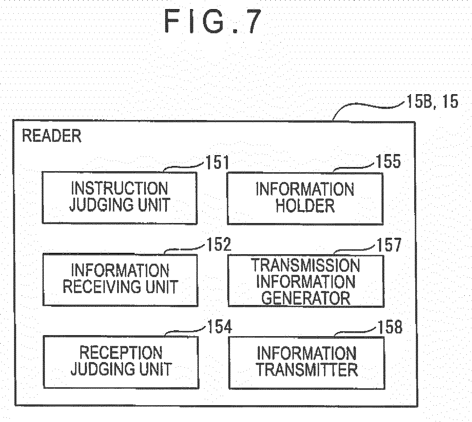

Fig. 7 is a block diagram showing a configuration of the reader 15B serving as the slave reader.

The reader 15B is configured in the same manner as the reader 15A except that some units are omitted. Specifically, as shown in Fig. 7, the reader 15B includes the instruction judging unit 151, information receiving unit 152, reception judging unit 154, information holder 155, transmission information generator 157 and information transmitter 158 described above. Among the above components, the information holder 155 and the information transmitter 158 respectively correspond to a second-communication-device holder and a second-communication-device transmitter of the invention.

The information holder 155 of the reader 15B holds the parts information received by the information receiving unit 152 as the slave acquisition information. The transmission information generator 157 of the reader 15B generates transmission information based on the slave acquisition information held by the information holder 155. The information transmitter 158 transmits the transmission information to the reader 15A serving as the master reader. When the reception judging unit 154 judges that the parts information is not acquired from the identification devices 30 (30C, 30D) that are target components of which parts information is acquired, the transmission information generator 157 of the reader 15B also generates the above error information and the information transmitter 158 transmits the error information.

In the exemplary embodiment, the reader 15B does not include the slave control unit 153 and the information judging unit 156 as described above. However, the reader 15B may have the slave control unit 153 and the information judging unit 156, where the slave control unit 153 and the information judging unit 156 are non-functional.

The information receiving unit 152 of the readers 15 communicates with the IC tags 301 of the identification devices 30, for instance, via electric waves in the UHF zone at 900 MHz. Since the readers 15 can communicate with the identification devices 30 (30A, 30B, 30C and 30D) that are about 1 m away from the readers 15 when the frequency of the electric waves fall within the above frequency zone, the readers 15 can be used even in the pump room 5A1 and the engine room 5A2.

In the exemplary embodiment, the readers 15 in a form of a reading device are used as communication devices. However, the readers 15 may be replaced by a reader-writer (reading and writing device) having a reading function of information from the identification devices 30 and a writing function of information to the identifcation devices 30.

Although two readers 15 (15A, 15B) are provided in the exemplary embodiment, only the reader 15A may be provided. Alternatively, the readers 15 may be provided by three or more readers including the readers 15A and 15B. Since the communication conditions between the readers 15 and the identification devices 30 depend on a relative positional relationship therebetween, with the plurality of readers 15, the parts information stored in the IC tags can be read with higher probability.

### Description of Each Controller

As shown in Fig. 5, in addition to the above configuration, the hydraulic excavator 1 (working vehicle) further includes the communication controller 200, the readers 15A and 158, an engine controller 211, a pump controller 212 and a monitor 213 and an in-vehicle network 210 that connects the communication controller 200, readers 15A and 15B, engine controller 211, pump controller 212 and monitor 213 to allow data communication therebetween.

The engine controller 211 adjusts a fuel amount to be supplied to the engine EG to control output of the engine EG. The pump controller 212 controls output of the pump PN.

The monitor 213 has a display function of displaying a remaining amount of the fuel, failure information of the hydraulic excavator 1, and the like, and also has an input function of setting the operation of the hydraulic excavator 1. The monitor 213 includes an SMR (service meter) that measures an operational duration of the engine EG of the hydraulic excavator 1, the SMR being displayed on the monitor 213. Information of the SMR (information of accumulated operational duration) is transmitted to the management center 110 through the communication controller 200 and the communication network 120.

The communication controller 200 has a communication terminal 202 connected to an antenna 201 in order to allow intercommunication with the management center 110 via a later-described communication network 120. The communication controller 200 not only serves as the controllers 211 and 212, the monitor 213 and a controller for controlling the operations of the readers 15 but also serves as a processor for processing the information acquired from the readers 15. In other words, the communication controller 200 corresponds to the processor of the invention. Accordingly, the communication controller 200 includes a storage for storing data acquired by the readers 15 and a program of processing the data. For instance, the program executes a process of comparing the data newly acquired by the readers 15 with the data stored in the storage. The communication controller 200 includes a calculator for executing such a process.

In the exemplary embodiment, the communication controller 200 activates the readers 15 when an operator of the hydraulic excavator 1 turns ON a key switch (not shown) to start the engine EG. In order to activate the readers 15, it is only required to turn the key switch to an accessory position to supply electric power from a battery (not shown) to electronic devices such as the communication controller 200 and the readers 15. In other words, the engine EG is not necessarily started in order to operate the readers 15.

A timing of activating the readers 15 is not limited to the above. For instance, a timer function may be provided to the communication controller 200 and the communication controller 200 may be set to activate the readers 15 at a predetermined timing (e.g., once per day or once per week). In other words, the readers 15 may be activated on a regular basis to receive the parts information from the identification devices 30.

Alternatively, the communication controller 200 may activate the readers 15 in response to an operational instruction by the operator. Specifically, when the operator operates the operational button for generating a predetermined start signal, the communication controller 200 may activate the readers 15 on receiving the start signal.

Further alternatively, the communication controller 200 may activate the readers 15 in response to an operational instruction by an administrator of the management center 110 described later (see Fig. 5). Specifically, the communication controller 200 may activate the readers 15 when the administrator transmits a predetermined start signal from the management center 110 to the hydraulic excavator 1 via the communication network 120 and the communication controller 200 receives the start signal. Alternatively, instead of the operational instruction by the administrator, a start signal generation program for generating a start signal in a predetermined cycle may be provided in the management center 110, thereby automatically transmitting the start signal to the hydraulic excavator 1.

In addition, a sensor may be provided to each of the filter heads 13A and 13B to detect attachment and detachment of the respective filters 20A, 20B and 20C (in which a filter head to be attached to the filter 20C is not shown), so that the readers 15 may be activated in response to the output from the sensor.

The communication controller 200 processes the data acquired by the readers 15 as described above. For instance, the communication controller 200 compares the above acquired data with the stored data. When the communication controller 200 judges that data is newly acquired, the communication controller 200 updates the stored data with the newly acquired data. Such a comparison process may be conducted in the management server 111 described later.

The communication controller 200 transmits the information read from the identification devices 30 along with date data to the management server 111 of the management center 110 via the communication terminal 202, the antenna 201 and the communication network 120. The communication controller 200 includes, for instance, a timepiece IC (not shown) and can acquire the date data with the timepiece IC. The date data may be exemplified by date and time when the readers 15 are activated (date and time when electric waves are transmitted), date and time when the readers 15 read the data of the identification devices 30, and date and time when the data of the identification devices 30 is transmitted to the management server 111. The date data may be replaced by data indicating a date or data indicating a time.

Note that a controller (e.g., the pump controller 212) other than the communication controller 200 or the readers 15 may have the above-described functions of the communication controller 200.

In the hydraulic excavator 1 that is the working vehicle described above, the identification information acquisition system of the exemplary embodiment includes the identification devices 30 (30A, 30B, 30C, 30D) provided to the hydraulic excavator 1, the readers 15 (15A, 15B) and the communication controller 200.

### Identification Information Acquisition System for Working Vehicle

Next, the identification information acquisition system 100 with use of the information stored in the identification devices 30 will be described. The identification information acquisition system 100 including the hydraulic excavator 1 is exemplarily described below. However, the invention is also applicable to other working vehicles in a form of a construction machine.

The identification information acquisition system 100 manages and monitors the parts and engine EG installed in the working vehicle in the management center 110 located apart from the working vehicle, via the communication network 120. As shown in Fig. 5, the identification information acquisition system 100 includes the management center 110, at least one working vehicle (e.g., the hydraulic excavator 1), and the communication network 120 that transmits and receives information between the management center 110 and the working vehicle. The working vehicle for the identification information acquisition system 100 may be of different types (e.g., a hydraulic excavator and a bulldozer).

Among these, the communication network 120 is used for data communication in a form of wireless communication. A mobile phone network and a satellite communication network are usable.

The management center 110 includes the management server 111 that manages all various information including parts information of a plurality of working vehicles.

The management server 111 includes a large-volume storage including hard disks and the like. The management server 111 can mutually communicate with a display 112 including a liquid crystal monitor and the like, a communication device 113 capable of wireless communication or wired communication, and the like. The management server 111 manages and stores the above parts information received from the hydraulic excavator I, the information about the accumulated operational duration, and the like via the communication network 120.

Specifically, the management server 111 in a form of the above storage stores TID and EPC contained in the parts information in manner associated with each other. Accordingly, by cross-checking the newly acquired parts information (data), which is a combination of TID and EPC read from the IC tag 301, and the stored parts information (data), the management server 111 can judge whether or not the part (e.g., filter 20) of the working vehicle is replaced and whether or not the replaced part is a genuine product. By such a cross-checking, a time elapsed after the part is attached to the working vehicle can be recognized. Accordingly, for instance, the management server 111 can manage a replacement timing of the filter 20.

### Information Collection Process in Identification Information Acquisition System

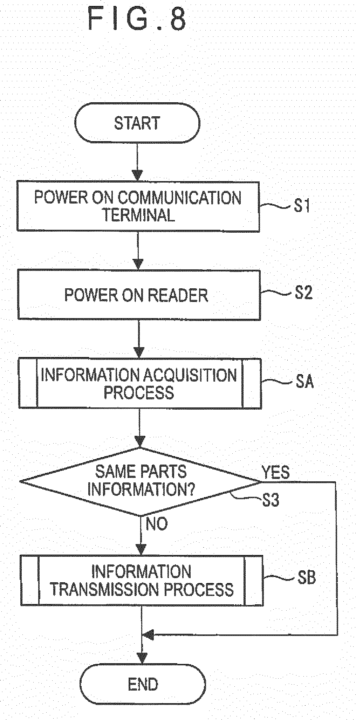

Fig. 8 is a flow chart showing an information collection process executed in the identification information acquisition system 100.

In the identification information acquisition system 100 in the exemplary embodiment, an information collection process is executed in which the readers 15 acquire the parts information from the identification devices 30 based on the instruction information inputted from the communication controller 200 of the hydraulic excavator 1 and the readers 15 transmit the received parts information to the management center 110 via the communication network 120.

In the information collection process, as shown in Fig. 8, electric power is initially supplied from a battery (not shown) to the communication terminal 202 in response to the ON operation of the key switch (not shown) by the operator and a power source of the communication terminal 202 is turned ON, whereby the communication controller 200 is activated (Step S1).

Further, electric power is also supplied from a battery (not shown) to the readers (15A, 15B) and a power source of the readers 15 (15A, 15B) is turned ON (Step S2). Alternatively, the power source of the readers 15 may be turned ON by the operational instruction of the administrator and the like. Specifically, the communication controller 200 may transmit an ON signal for turning ON the power source of the readers 15 (15A, 15B) to the readers 15 (15A, 15B) via the in-vehicle network 210, whereby the power source of the readers 15 (15A, 15B) may be turned ON after receiving the ON signal. With this arrangement, even when the hydraulic excavator 1 is not operated, for instance, during night, the readers 15 (15A, 15B) can acquire the parts information including the identifcation information from the identification devices 30. For instance, the communication controller 200 is set to be automatically activated in a predetermined cycle. When the communication controller 200 is activated and receives a predetermined start signal via the antenna 201, the communication controller 200 transmits the ON signal to the readers 15 (15A, 15B) via the in-vehicle network 210. After receiving the ON signal, the readers 15 (15A, 15B) are activated to read the identifcation information of the identification devices 30. After Step S2, the communication controller 200 and the readers 15 execute an information acquisition process SA.

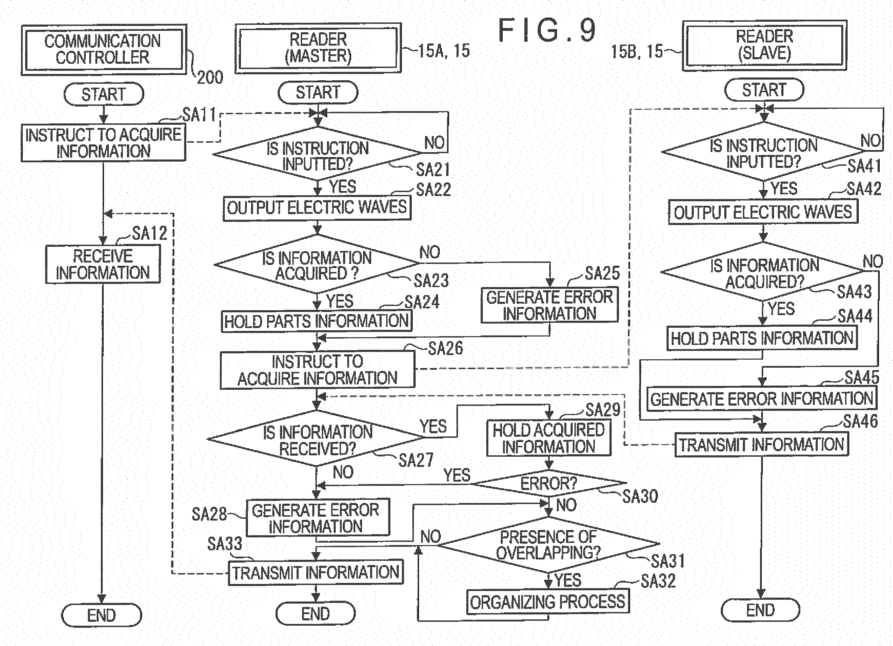

Fig. 9 is a flow chart showing the information acquisition process SA.

In the information acquisition process SA, as shown in Fig. 9, the communication controller 200 instructs the master reader 15A to acquire the parts information from the identification devices 30 (Step SA11). Specifically, the communication controller 200 outputs instruction information of acquiring the parts information to the reader 15A via the in-vehicle network 210. Subsequently, the communication terminal 202 proceeds to a process in Step SA12.

After the power source is turned ON in Step S2, the reader 15A judges using the instruction judging unit 151 whether or not the instruction information of acquiring the parts information is inputted from the communication terminal 202 (Step SA21). This judgment process by the instruction judging unit 151 is repeated until the instruction information is inputted.

When the instruction judging unit 151 judges that the instruction information is inputted (Step SA21, Yes), the reader 15A outputs electric waves using the information receiving unit 152 to the identification devices 30A and 30B for a predetermined time.

Subsequently, the reader 15A judges using the reception judging unit 154 whether or not the parts information is acquired from the identification devices 30A and 30B (whether or not the electric waves including the parts information is received)(Step SA23).

When it is judged in the judgment process in Step SA23 that the parts information is acquired (i.e., the electric waves are received)(Step SA23, YES), the reader 15A associates the acquired parts information with the above date data and holds the associated information as the master acquisition information, using the information holder 155 (Step SA24). The date data acquired by the timepiece IC (not shown) of the communication controller 200 may be associated with the parts information. Alternatively, the reader 15A may transmit the acquired parts information as the transmission information as described later to the communication controller 200 without being associated with the date data. The transmitted parts information may be subsequently associated with the date data. Subsequently, the reader 15A proceeds to a process in Step SA26.

On the other hand, when it is judged in the judgment process in Step SA23 that the parts information is not acquired (Step SA23, NO), the reader 15A generates the error information including the information indicating the reader 15 (15A) and the information indicating no communication between the reader 15 (15A) and the identification devices 30, using the transmission information generator 157 (Step SA25). Subsequently, the reader 15A proceeds to a process in Step SA26.

In Step SA26, the reader 15A outputs instruction information of instructing the acquisition of the parts information to the reader 15B via the in-vehicle network 210, using the slave control unit 153 (Step SA26). Subsequently, the reader 15A proceeds to a process in Step SA27.

The reader 15B serving as the slave reader executes Steps SA41 to 45, which are the same as Steps SA21 to 25, and Step SA46.

Specifically, using the instruction judging unit 151, the reader 15B judges whether or not the above instruction information is inputted via the in-vehicle network 210 (Step SA41). This judgment process is repeated until the instruction information is inputted.

When the instruction judging unit 151 judges that the instruction information is inputted (Step SA41, Yes), the reader 15B outputs electric waves using the information receiving unit 152 to the identification devices 30C and 30D for a predetermined time (Step SA42).

Subsequently, the reader 15B judges using the reception judging unit 154 whether or not the parts information is acquired from the identification devices 30C and 30D (whether or not the electric waves including the parts information are received)(Step SA43).

When it is judged in the judgment process in Step SA23 that the parts information is acquired (i.e., the electric waves are received) (Step SA43, YES), the reader 15B associates the acquired parts information with the above date data and holds the associated information as the slave acquisition information, using the information holder 155 (Step SA44). The acquisition of the date data and the association between the parts information and the date data may be conducted in the same manner as described above. Subsequently, the reader 15B proceeds to a process in Step SA46.

On the other hand, when it is judged in the judgment process in Step SA43 that the parts information is not acquired (Step SA43, NO), the reader 15B generates the error information including the information indicating the reader 15 (15B) and the information indicating no communication between the reader 15 (15B) and the identification devices 30, using the transmission information generator 157 (Step SA45). Subsequently, the reader 15B proceeds to a process in Step SA46.

In Step SA46, when the slave acquisition information is held in Step SA44, the reader 15B generates the transmission information including the slave acquisition information. When the error information is generated in Step SA45, the reader 15B generates the transmission information including the error information and transmits the transmission information using the information transmitter 158 to the reader 15A (Step SA46).

By this step, the information acquisition process SA by the reader 15B ends.

In Step SA27, using the reception judging unit 154, the reader 15A judges whether or not the transmission information is received from the reader 15B within a predetermined time elapsed after the output of the instruction information in Step SA26 (Step SA27).

When it is judged in the judgment process in Step SA27 that the transmission information is not received (Step SA27, NO), the reader 15A generates the error information including the information indicating the reader 15B and the information indicating the operational state of the reader 15B (information indicating that the transmission information from the reader 15B is not received and that the reader 15B is not normally operated, using the transmission information generator 157 (Step SA28). Subsequently, the reader 15A proceeds to a process in Step SA31.

On the other hand, when it is judged in the judgment process in Step SA27 that the transmission information is received (Step SA27, YES), the reader 15A holds the slave acquisition information contained in the transmission information and the parts information held in Step SA24 as the master acquisition information, using the information holder 155 (Step SA29). At this time, in the same manner as in Step SA24, the reader 15A associates the parts information contained in the slave acquisition information with the above date data and holds the associated information.

Next, the reader 15A judges using the information judging unit 156 whether or not the slave acquisition information, which is contained in the master acquisition information, contains the error information (Step SA30).

When it is judged in the judgment process in Step SA30 that the error information is not contained (Step SA30, NO), the reader 15A proceeds to a process in Step SA31.

When it is judged in the judgment process in Step SA30 that the error information is contained (Step SA30, YES), the reader 15A proceeds to the process in Step SA28 and generates the error information based on the acquired error information. Subsequently, the reader 15A proceeds to the process in Step SA31 as described above.

In Step SA31, the reader 15A executes the above overlapping judgment process using the information judging unit 156 (Step SA31).

When it is judged in the judgment process in Step SA31 that the parts information having the same contents is not contained in the master acquisition information (Step SA31, NO), the reader 15A proceeds to a process in Step SA33.

On the other hand, when it is judged in the judgment process in Step SA31 that the parts information having the same contents is contained in the master acquisition information (Step SA31, YES), the reader 15A executes the above organizing process using the information holder 155. With this process, the overlapping parts information is organized. Subsequently, the reader 15A proceeds to a process in Step SA33.

In Step SA33, when the master acquisition information is held by the information holder 155, the reader 15A generates the transmission information including the master acquisition information using the transmission information generator 157. When the error information is generated by the transmission information generator 157, the reader 15A generates the transmission information including the error information. Subsequently, the reader 15A transmits the transmission information to the communication controller 200 via the in-vehicle network 210 using the information transmitter 158 (Step SA33).

By this step, the information acquisition process SA by the reader 15A ends.

When a plurality of readers 15B serving as the slave readers are present, each of the plurality of readers 15B executes the processes in Steps SA26 to SA30 described above and executes the above overlapping judgment process in Step SA31 and the above organizing process in Step SA32 to all the acquired parts information.

In Step SA12, the communication controller 200 acquires the transmission information (information including at least one of the parts information and the error information) transmitted by the reader 15A.

By this step, the information acquisition process SA by the communication controller 200 ends.

Referring back to Fig. 8, in the hydraulic excavator 1 after the information acquisition process SA ends, the communication controller 200 judges whether or not the parts information contained in the transmission information acquired in Step SA12 described above (the parts information received from each of the identification devices 30) and the parts information already stored in a predetermined storage of the communication controller 200 are the same (Step S3). Since an instance where the error information is contained in the transmission information corresponds to an instance where the parts information cannot be acquired by some reason, the transmission information including the error information is judged to be not the same as the stored parts information. Moreover, also in an instance where the transmission information cannot be acquired from the reader 15A in Step SA12, it is judged that the parts information is not the same. In such an instance, the communication controller 200 generates the error information including the information indicating that the information cannot be acquired from the reader 15 (15A), in other words, the information indicating that the reader 15A is not normally operated. Subsequently, the communication controller 200 transmits the transmission information including the error information to the management server 111 in an information transmission process SB described later.

When it is judged in the judgment process in Step S3 that the newly acquired parts information and the stored parts information are the same (Step S3, YES), the communication controller 200 ends the information collection process in the exemplary embodiment. However, even when the newly acquired parts information is the same as the already stored parts information, the later-described information transmission process SB may be executed.

On the other hand, when it is judged in the judgment process in Step S3 that the newly acquired parts information and the stored parts information are not the same (Step S3, NO), the communication controller 200 executes the information transmission process SB of transmitting the acquired information to the management center 110.

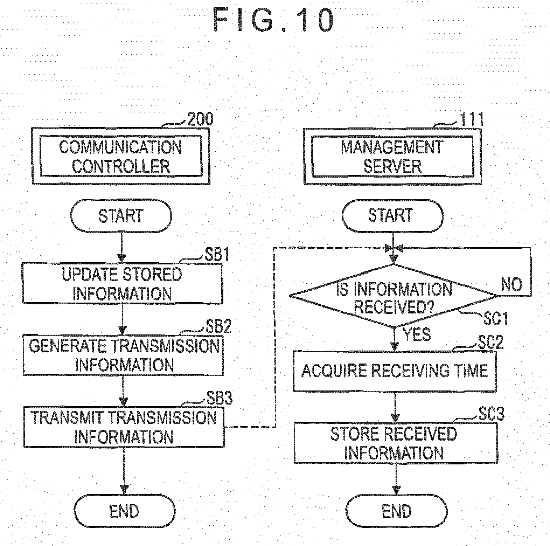

Fig. 10 is a flow chart showing the information transmission process SB to be executed by the communication controller 200 and an information storage process to be executed by the management server 111.

Firstly, the information transmission process SB (Steps SB1 to SB3) will be described.

In the information transmission process SB, when the parts information is newly acquired, the communication controller 200 updates the already stored parts information with the newly acquired parts information as shown in Fig. 10 (Step SB1). At this time, when the parts information of all the identification devices 30 is already acquired, the communication controller 200 may update all the already stored parts information with the newly acquired information. When the acquired parts information is different from the already stored parts information, only the parts information judged different may be updated with the newly acquired parts information. Alternatively, the currently acquired parts information may be displayed on the monitor 213. Further, when the error information is acquired, the monitor 213 or the like may issue an alarm message.

Next, the communication controller 200 generates the transmission information for transmitting the acquired information to the management server 111 (Step SB2). The transmission information contains the parts information judged different and the error information in Step S3 described above and the above date data relating to those information. All the newly acquired information (the information contained in the transmission information received from the reader 15A in Step SA12) may be contained in the transmission information.

Subsequently, the communication controller 200 transmits the generated transmission information to the management server 111 via the communication network 120 (Step SB3).

By this step, the information transmission process SB in the hydraulic excavator 1 ends.

Next, the information storage process (Steps SC1 to SC3) will be described. The management server 111 executes the information storage process described below.

In the information storage process, as shown in Fig. 10, the management server 111 repeats the judgment process of judging whether or not the transmission information is received from a predetermined working vehicle (e.g., the hydraulic excavator 1)(Step SC1).

When it is judged that the transmission information is received (Step SC1, YES), the management server 111 acquires a date (time and date) when the transmission information is received (Step SC2).

Subsequently, the management server 111 extracts the parts information and the error information from the received transmission information and stores these information and the date acquired in Step SC2 in a manner associated with each other (Step SC3). At this time, after executing the same judgment process in Step S3, the parts information different from the previously acquired parts information and the error information may be reported to the administrator of the management server 111.

By this step, the information storage process in the management server 111 ends. In other words, the information collection process in the identification information acquisition system 100 ends.

In the above information collection process, when the operator turns ON the key switch (not shown), the power source of the readers 15 is turned ON and the information acquisition process SA is executed. However, the timing when the power source of the readers 15 is turned ON is changeable as desired as described above.

With the above-described identification information acquisition system 100, the management server 111 acquires the parts information of the identification devices 30A, 30B, 30C and 30D, thereby recognizing the replacement timing of the filters 20A, 20B and 20C and the number of times of overhaul of the engine EG.

When the parts information about the identification devices 30 received by the management server 111 and the date information associated with the parts information when the hydraulic excavator 1 acquires and transmits the parts information are respectively different from the parts information and the date information which are previously received by the management server 111, the management server 111 can recognize the attachment of the filters 20A, 20B and 20C and the engine EG and can recognize the time of the parts replacement and the time of the overhaul of the engine EG.

It is supposed that an imitation filter may be not provided with a genuine identification device 30 or may be provided with no identification device 30. Accordingly, when the imitation filter is attached to the hydraulic excavator 1, the reader 15, communication controller 200 and management server 111 may be unable to acquire the parts information. In this case, the readers 15 generate the error information described above and the error information is acquired by the communication controller 200 and the management server 111 via the reader 15A serving as the master reader. Consequently, the management server 111 can presume that an imitation filter is possibly attached to the hydraulic excavator 1,

The respective replacement timings of the filters 20A, 20B and 20C are not necessarily the same, but the replacement timing of each of the filters 20A, 20B and 20C can be recognized by the communication controller 200 by comparing the newly acquired data with the already stored data as described above. Since the management server 111 can recognize use duration of each of the filters 20A, 20B and 20C in the working vehicle in association with the information of the SMR (service meter)(not shown) recording the accumulated operational duration in the working vehicle, a next replacement timing of the filters 20A, 20B and 20C can be easily and reliably managed. Moreover, since the number of the times of the overhaul of the engine EG, which is contained in the parts information of the identifcation device 30D, can be acquired, a next overhaul timing can be easily and reliably managed based on a change in the accumulated operational duration after an increment in the number of the times of the overhaul of the engine EG.

It is crucial to reliably acquire the information about the identification devices 30 by a suitable operation of each of the readers 15 in order to establish the identification information acquisition system 100.

An acquisition pattern of the parts information in the identification information acquisition system 100 will be described with reference to Figs. 11 to 14. The acquisition pattern is not limited to examples shown in Figs. 11 to 14, but the examples shown in Figs. 11 to 14 are representative of the acquisition pattern.

Figs. 11 to 14 show various examples of the acquisition pattern of the parts information when the identification information (parts information) of two identification devices 30 attached to different target components (e.g., filters 20A, 20B) are acquired by the readers 15A and 15B.

In an instance shown in Fig. 11, a first one of the identification devices 30 stores parts information including identification information ABC while a second one of the identification devices 30 stores parts information including identification information DEF. The reader 15A acquires the parts information including the identification information ABC of the first one of the identification devices 30 while the reader 15B acquires the parts information including the identification information DEF of the second one of the identification devices 30. In the instance of Fig. 11, the readers 15A and 15B thus read the parts information including the respective identification information ABC and DEF from the identification devices 30.

In this instance, the reader 15B (second communication device) transmits the parts information including the acquired identification information DEF to the reader 15A (first communication device). The reader 15A holds the self-acquired identification information ABC and the identification information DEF transmitted from the reader 15B and judges whether or not the identification information having the same contents is present. Since the identification information ABC is different from the identification information DEF, the reader 15A does not merge the above identification information (parts information) and transmits the parts information including the identification information ABC and the identification information DEF to the communication controller 200.

Also in an instance shown in Fig. 12, the first one of the identification devices 30 stores the parts information including the identification information ABC while the second one of the identification devices 30 stores the parts information including the identification information DEF. In the instance of Fig. 12, since the two identification devices 30 exist within the communication range of the readers 15A and 15B, each of the readers 15A and 15B acquires the parts information including the identification information ABC and the identification information DEF from the identification devices 30. In the instance of Fig. 12, thus, the readers 15A and 15B read the same parts information including the identification information ABC and DEF.

In this instance, the reader 15B (second communication device) transmits the parts information including the acquired identification information ABC and DEF to the reader 15A (first communication device). The reader 15A holds the self-acquired parts information including the identification information ABC and DEF and the parts information including the identification information ABC and DEF transmitted from the reader 15B and judges whether or not the identification information having the same contents is present. The reader 15A merges pieces of parts information containing the same identification information ABC into a single piece of parts information containing the identification information ABC and merges pieces of parts information containing the same identification information DEF into a piece single of parts information containing the identification information DEF. By the above organizing process (merging process), a piece of parts information including the identification information ABC and a piece of parts information including the identification information DEF remain present. Accordingly, the reader 15A transmits the parts information including the identification information ABC and the identification information DEF to the communication controller 200.

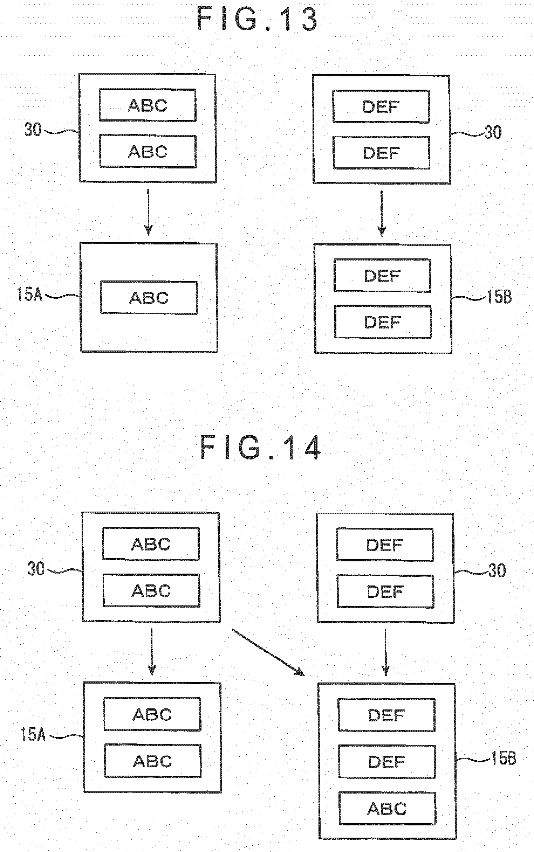

In an instance shown in Fig. 13, the first one of the identification devices 30 has two identification components in which the parts information including identification information ABC is stored while the second one of the identification devices 30 has two identification components in which the parts information including identification information DEF is stored. The reader 15A acquires the parts information including identification information ABC from one of the identification components of the first one of the identification devices 30 while the reader 15B acquires the parts information including the identification information DEF from the two identification components of the second one of the identification devices 30. In the instance of Fig. 13, the reader 15B thus reads the same parts information from each of the two identification components of the second one of the identification devices 30.

In this instance, the reader 15B (second communication device) transmits two pieces of parts information including the acquired identification information DEF to the reader 15A (first communication device). The reader 15A holds the self-acquired parts information including the identification information ABC and two pieces of parts information transmitted from the reader 15B and judges whether or not the identification information having the same contents is present. The reader 15A merges the same parts information including the identification information DEF into a piece of parts information including the identification information DEF. By the above organizing process (merging process), a piece of parts information including the identification information ABC and a piece of parts information including the identification information DEF remain present. Accordingly, the reader 15A transmits the parts information including the identification information ABC and the identification information DEF to the communication controller 200.

In the instance of Fig. 13, the first one of the identification devices 30 has two identification components in which the parts information including identification information ABC is stored. However, the first one of the identification devices 30 may have only one identification component in which the parts information including identification information ABC is stored. Also in this instance, when the reader 15A acquires only a piece of parts information including the identification information ABC and the reader 15B acquires two pieces of parts information including the identification information DEF, the reader 15A is to execute the same merging process as in the instance of Fig. 13.

In an instance shown in Fig. 14, in the same manner as in the instance of Fig. 13, the first one of the identification devices 30 has two identification components in which the parts information including identification information ABC is stored while the second one of the identification devices 30 has two identification components in which the parts information including identification information DEF is stored. The reader 15A reads parts information from each of the two identification components of the first one of the identification devices 30. The reader 15B acquires the parts information (including identification information DEF) from each of the two identification components of the second one of the identification devices 30 and further acquires the parts information (including the identification information ABC) from one of the two identification components from the first one of the identification devices 30. In the instance of Fig. 14, the reader 15A thus reads the same parts information from each of the two identification components of the first one of the identification devices 30. The reader 15B reads the same parts information from each of the two identification components of the second one of the identification devices 30.

In this instance, the reader 15B (second communication device) transmits the acquired three pieces of the parts information (three pieces of the parts information respectively including identification information DEF, DEF and ABC) to the reader 15A (first communication device). The reader 15A holds the self-acquired two pieces of parts information (two pieces of parts information including the identification information ABC and ABC) and the three pieces of parts information (three pieces of the parts information respectively including identification information DEF, DEF and ABC) transmitted from the reader 15B and judges whether or not the identification information having the same contents is present. The reader 15A merges pieces of parts information containing the same identification information ABC into a single piece of parts information containing the identification information ABC and merges pieces of parts information containing the same identification information DEF into a piece single of parts information containing the identification information DEF. By the above organizing process (merging process), a piece of parts information including the identification information ABC and a piece of parts information including the identification information DEF remain present. Accordingly, the reader 15A transmits the parts information including the identification information ABC and the identification information DEF to the communication controller 200.

According to the above described hydraulic excavator 1 and identification information acquisition system 100 in the exemplary embodiment, the following advantages can be attained.

When it is judged that the parts information having the same contents is contained in the master acquisition information containing the parts information acquired by the reader 15A from the identification devices 30A and 30B and the slave acquisition information received from the reader 15B (e.g., the parts information acquired from the identification devices 30C and 30D by the reader 15B), the parts information having the same contents are merged. In other words, when the parts information having the same contents is simultaneously acquired from the same identification device by the readers 15A and 15B, the parts information having the same contents in the master acquisition information is merged.

Since the plurality of readers 15 are provided in order to reliably acquire the parts information stored in the identification device 30, the readers 15 may acquire the same parts information. However, even when the readers 15 acquire the same parts information, the acquired information can be accurately processed by the hydraulic excavator I and the identification information acquisition system 100 according to the exemplary embodiment to be provided to the management server 111 (an administrator). Thus, a volume of information to flow into the in-vehicle network 210 is reducible and a delay in the processing of the communication controller 200 (the processor) are avoidable. Moreover, for instance, when the parts information is outputted to an outside from the communication controller 200 (processor), a communication cost can be saved and a communication time can be shortened because of the reduction in the amount of the parts information.

Moreover, the master acquisition information to be transmitted from the reader 15A to the communication controller 200 can be prevented from containing the parts information having the same contents. Accordingly, a load on the communication controller 200 in processing the parts information contained in the master acquisition information is reducible, so that a load on the management server 111 is reducible. Additionally, since the information volume of the master acquisition information is reducible, the information volume to be transmitted to the communication controller 200 and the management server 111 is reducible.

The information judging unit 156 judges that the parts information has the same contents when one or both of the part number (type information) and the serial number (unique information) are the same. With this arrangement, parts having the same part number and the same serial number do not exist. Accordingly, among the acquired parts information, overlapping of the parts information acquired from the same identification device 30 and overlapping of the parts information acquired from a plurality of IC tags 301 of the same identification device 30 can be reliably judged. Accordingly, the parts information can be appropriately merged.

In some cases, each of the identification devices 30A, 30B and 30C has a plurality of IC tags 301 (an identification part) storing the same parts information as shown in Figs. 13 and 14. For instance, a plurality of identification parts storing the same parts information are attached to a single filter 20 so that the reader 15 can read the parts information more reliably. With this arrangement, even when one of a plurality of IC tags 301 attached to a single filter 20 is not disposed to the reader 15 in a suitable direction depending on a layout of the filter 20 (i.e., a target component to which an identification device is attached) and a layout of the identification device 30, the rest of the plurality of IC tags 301 can be easily disposed to the reader 15 in a suitable direction. Accordingly, irrespective of the layout of the filter 20 and the identification device 30, IC tags 301 and the reader 15 can easily communicate with each other, thereby facilitating acquisition of the parts information by the reader 15. In this arrangement, in at least one of an instance where the reader 15A acquires the parts information having the same contents from a plurality of IC tags 301 of a single identification device 30, an instance where the reader 15B acquires the parts information having the same contents from the plurality of IC tags 301 of the single identification device 30, and an instance where the readers 15A and 15B simultaneously acquire the parts information having the same contents from the same identification device 30, the parts information having the same contents is contained in the master acquisition information. In such instances, the parts information having the same contents in the master acquisition information is merged.

### Modification(s)

The scope of the invention is not limited to the above exemplary embodiment but includes modifications and improvements to the extent that an object of the invention can be achieved.

In the above exemplary embodiment, the reader 15B (second communication device) has no information judging unit 156 and the information holder 155 of the reader 15B does not execute the organizing process. However, the arrangement of the reader 15B is not limited thereto. Specifically, the reader 15B may also include the information judging unit 156 (corresponding to a second-communication-device judging unit). When the information judging unit 156 judges that the slave acquisition information contains the same parts information, the information holder 155 (corresponding to the second-communication-device holder) of the reader 15B may execute the above organizing process of merging the parts information judged to have the same contents among the parts information contained in the slave acquisition information. In the instances of Figs. 13 and 14, the reader 15B holds two pieces of parts information including the same identification information DEF in the slave acquisition information. In such instances, when the reader 15B has the information judging unit 156 (the second-communication-device judging unit), the information holder 155 of the reader 15B may merge the two pieces of parts information including the same identification information DEF.

In other words, the parts information having the same contents are merged in the reader 15B when it is judged that the parts information having the same contents is acquired and contained in the slave acquisition information including the parts information that is acquired from the identification devices 30 supposed to be positioned within the communication range or the identification devices 30 supposed to be not positioned within the communication range (e.g., when a filter 20 is provided with identification devices 30 storing the same parts information). Accordingly, when the reader 15B acquires the parts information having the same contents from each of the identification devices, the reader 15B merges the parts information having the same contents and transmits the merged slave acquisition information to the reader 15A. On the other hand, when it is judged that the parts information having the same contents is not contained, the reader 15B transmits the held slave acquisition information to the reader 15A.

This arrangement prevents the slave acquisition information to be transmitted to the reader 15A from containing the parts information having the same contents. Accordingly, a load on the reader 15A in processing the slave acquisition information is reducible. Additionally, since an information volume of the slave acquisition information is reducible, the information volume to be transmitted to the reader 15A is reducible.

On the other hand, when the reader 15B executes the judgment process and the organizing process, the information judging unit 156 of the reader 15A (the first communication device) may not execute the above overlapping judgment process to the received slave acquisition information. In this arrangement, as long as the respective communication ranges of the readers 15A and 15B certainly do not overlap with each other, the information judging unit 156 of the reader 15A may execute the above overlapping judgment process only to the parts information acquired by the reader 15A from the identification device 30.

Further, the management server 111 may execute the overlapping judgment process and the organizing process while the reader 15A and the reader 15B do not execute the overlapping judgment process and the organizing process. In the above modification, the identification information acquisition system 100 includes the identification device 30 (30A, 30B, 30C, 30D) provided to the hydraulic excavator 1, the readers 15 (15A,15B), the communication controller 200 and the management server 111. In this arrangement, the reader 15B transmits the acquired parts information to the reader 15A and the reader 15A transmits the parts information received from the reader 15B and the self-acquired parts information to the management server 111 through the communication controller 200. The management server 111 judges whether or not the received parts information contains the parts information having the same identification information. When the management server 111 judges that the received parts information contains the parts information having the same identification information, the management server 111 merges the parts information having the same identification information.

When the reader 15A has a function of the communication controller 200, the reader 15A may directly transmit the parts information to the management server 111.

In the above exemplary embodiment, the information judging unit 156 judges that the parts information including the identification information having the same part number (type information) and the same serial number (unique information) is the parts information having the same contents. However, in addition to the above information, any other information may be used for judging whether or not the parts information has the same contents.

Alternatively, the parts information including the identification information having the same contents in at least one of the type information (part number) and the unique information (serial number) may be judged as the parts information having the same contents. In a working vehicle (hydraulic excavator 1), since components to which the identification devices 30 are attached are usually different, different type information are assigned to the identification devices 30. Accordingly, for instance, when the readers 15A and 15B hold the identification information having the same type information, it can be judged that the readers 15A and 15B receive the same parts information.

Moreover, the unique information of each of the components is also usually different. Accordingly, when the readers 15A and 15B hold the identification information having the same unique information, it can be judged that the readers 15A and 15B receive the same parts information.

In the above exemplary embodiment, the reader 15A serving as the master reader is disposed in the pump room 5A1 of the machine room 5A and the reader 15B serving as the salve reader is disposed in the engine room 5A2 separated from the pump room 5A1 through the partition 5A3 in the machine room 5A. However, the layout of the readers 15A and 15B is not limited thereto. In the working vehicle, the readers 15 are not necessarily disposed in the machine room 5A, but may be disposed at a position where the readers 15 can communicate with the identification devices 30 to be removed together with the replacement component. Moreover, the position where the master reader is disposed and the position where the slave reader is disposed are not necessarily separated by a partition (e.g., the partition 5A3).

In the above exemplary embodiment, the reception judging unit 154 of the reader 15A judges that the reader 15B is not normally operated when the transmission information is not received from the reader 15B. However, the operational condition of the reader 15B is not necessarily judged as described above. The operational condition of the reader 15B may be judged based on other indexes. For instance, a temperature sensor may be provided in the engine room 5A2. When a temperature measured by the temperature sensor falls out of the allowable temperature range of the reader 15, the reader 15B may be judged not to be normally operated.

In the above exemplary embodiment, after the reader 15A receives and acquires the parts information, the reader 15A outputs the instruction information, whereby the reader 15B receives and acquires the parts information. However, the order of timings when the readers 15A and 15B respectively receive and acquire the parts information is not limited to the above. After the reader 15B serving as the slave reader receives and acquires the parts information, the reader 15A serving as the master reader may receive and acquire the parts information.

In the above exemplary embodiment, the communication controller 200 transmits the transmission information, which contains the parts information received from the identification device 30, to the management server 111 of the management center 110 via the communication network 120. However, a destination of the transmission information is not limited to the above. Specifically, the communication controller 200 does not necessarily transmit the parts information to the management center 110. In this case, for instance, the communication controller 200 may display the acquired parts information and the error information on the monitor 213, whereby the operator can recognize the parts information, and furthermore, conditions of the components. Alternatively, the acquired parts information and the error information may be stored in a predetermined storage. A service engineer may access the hydraulic excavator 1, connect a communication cable to a terminal (not shown) connected to the storage, and download the parts information stored in the storage and the error information to be outputted.

In the above exemplary embodiment, the communication controller 200 executes the judgment process of whether or not the parts information acquired by each of the readers 15 is the same as the already stored parts information (parts information previously acquired). However, the judgment process is not limited to the above. For instance, each of the readers 15 may store the previously received parts information, judge whether or not this parts information is the same as the newly received parts information, and individually transmit the judgment results to the communication controller 200 or transmit the judgment results to the communication controller 200 via the reader 15A (master reader). In this case, when the previously received parts information does not contain the parts information newly received from each of the identification device 30, the readers 15 judge that the new received parts information and the previous parts information are not the same.

In the above exemplary embodiment, the hydraulic excavator 1 (working vehicle) includes two readers 15 in which the reader 15A serves as the master reader and controls the reader 15B serving as the slave reader. The number of the readers 15 is not limited to two. The number of the readers 15 is appropriately changeable as long as at least one of a plurality of readers 15 serves as the master reader and controls the rest of the readers 15 serving as the slave reader. Further, the reader 15B is not necessarily controlled by the other reader 15 (15A). It is only required that the parts information acquired by the readers 15 is transmitted to at least one of the readers 15.

Furthermore, only a single reader 15 may be provided to the working vehicle. When there is only a small number of target components attached to the identification devices, when the target components are densely provided in a small range, or the like, the single reader 15 is enough to acquire the parts information from all the identification devices on the target components. Also in such instances, the reader 15 judges whether or not the acquired parts information contains the parts information having the same identification information. When the reader 15 judges that the acquired parts information contains the parts information having the same identification information, it is only required for the reader 15 to execute the organizing process (merging process).

In the above exemplary embodiment, each of the identification devices 30A, 30B and 30C includes at least one IC tag 301. However, the number of the IC tag 301 is not limited to the above. Two or more IC tags 301 may be provided. Moreover, the number of the identification device 30 of the working vehicle is also appropriately changeable.

In the above exemplary embodiment, the identification devices 30A, 30B and 30C are respectively provided to the filters 20A, 20B and 20C, and the identification device 30D is provided to the engine EG. However, the target component to which the identification device 30 is attached is not limited to the above. The target component to which the identification device 30 may be appropriately changeable or increasable. The identification device 30 may be provided to any component (including any device) configuring the working vehicle irrespective of whether the target component is a replacement component or not.

### INDUSTRIAL APPLICABILITY

The invention is applicable not only to a construction machine such as a hydraulic excavator, a wheel loader, a bulldozer, a motor grader and a dump truck but also to an industrial vehicle such as a forklift.

### EXPLANATION OF CODES

1 ··· hydraulic excavator (working vehicle), 20 (20A,20B,20C) ··· filter (target component to which an identification device is attached), 30A,30B,30C,30D ··· identification device, 15A···reader (communication device: a first communication device), 15B···reader (communication device: a second communication device), 155···information holder (first-communication-device holder, second-communication-device holder), 156··· information judging unit (first-communication-device judging unit, second-communication-device judging unit), 158···information transmitter (first-communication-device transmitter, second-communication-device transmitter), 200 ··· communication controller (processor), 301···1C tag (identification part), EG···engine (target component to which an identification device is attached).

## Claims

1. An identification information acquisition system comprising:
an identification device that is attached to a target component and stores identification information of the target component; and
a first communication device and a second communication device that wirelessly communicate with the identification device, wherein
the second communication device comprises:
a second-communication-device holder that holds the identification information acquired by the second communication device as second-communication-device acquisition information; and
a second-communication-device transmitter that transmits the second-communication-device acquisition information to the first communication device, and
the first communication device comprises:
a first-communication-device holder that holds the identification information acquired by the first communication device and the second-communication-device acquisition information received from the second communication device as first-communication-device acquisition information; and
a first-communication-device judging unit that judges whether or not the identification information having the same contents is contained in the first-communication-device acquisition information, and
the first-communication-device holder merges the identification information judged to have the same contents when the first-communication-device judging unit judges that the identification information having the same contents is contained in the first-communication-device acquiring information.

2. The identification information acquisition system according to claim 1, wherein
the identification information contains type information indicating a type of the target component and unique information of the target component, and
the first-communication-device judging unit judges that the identification information contains the same contents when at least one of the type information and the unique information is the same.

3. The identification information acquisition system according to claim 1 or 2, wherein
the second communication device comprises a second-communication-device judging unit that judges whether or not the identification information having the same contents is contained in the second-communication-device acquisition information, and
the second-communication-device holder merges the identification information judged to have the same contents when the second-communication-device judging unit judges that the identification information having the same contents is contained in the second-communication-device acquiring information.

4. The identification information acquisition system according to any one of claims I to 3, wherein
the identification device comprises a plurality of identification parts that store the identification information having the same contents.

5. An identification information acquisition system comprising:
an identification device comprising a plurality of identification parts that store identification information having the same contents; and
a communication device that wirelessly communicates with at least one of the plurality of identification parts of the identification device, wherein
the communication device comprises:
an information holder that holds the identification information acquired from one of the identification parts as acquired information; and
an information judging unit that judges whether or not the identification information having the same contents is contained in the acquired information, and
the information holder merges the identification information judged to have the same contents when the information judging unit judges that the identification information having the same contents is contained in the acquired information.

6. The identification information acquisition system according to any one of claims 1 to 5, further comprising:
a processor that processes the identification information acquired from the identification device.

7. A working vehicle comprising the identification information acquisition system according to any one of claims 1 to 6.

8. A working vehicle comprising:
a plurality of identification devices that are attached to a target component and store identification information of the target component;
a plurality of communication devices that wirelessly communicate with the plurality of identification devices to acquire the identification information; and
a processor that processes the identification information acquired by the plurality of identification devices,
the plurality of communication devices comprising a first communication device and a second communication device, an operation of the second communication device being controlled by the first communication device, wherein
the second communication device comprises:
a second-communication-device holder that holds the identification information acquired by the second communication device of the plurality of identification devices as second-communication-device acquisition information; and
a second-communication-device transmitter that transmits the second-communication-device acquisition information to the first communication device, and
the first communication device comprises:
a first-communication-device holder that holds the identification information acquired from the identification devices by the first communication device of the plurality of identification devices and the second-communication-device acquisition information received from the second communication device as first-communication-device acquisition information;
an information judging unit that judges whether or not the identification information having the same contents is contained in the first-communication-device acquisition information; and
a first-communication-device transmitter that transmits the first-communication-device acquisition information to the processor,
the first-communication-device holder merges the identification information judged to have the same contents when the information judging unit judges that the identification information having the same contents is contained in the first-communication-device acquisition information,
the first-communication-device transmitter transmits the merged identifcation information to the processor, and
the processor compares previously-acquired identification information with the merged identification information and outputs identification information judged to be newly acquired.

9. An identification information acquisition system comprising: a working vehicle; and a management server capable of communicating with the working vehicle,
the working vehicle comprising:
a plurality of identification devices that are attached to a target component and store identification information of the target component;
a plurality of communication devices that wirelessly communicate with the plurality of identification devices to acquire the identification information; and
a processor, wherein
the plurality of identification devices comprise a first communication device and a second communication device, an operation of the second communication device being controlled by the first communication device,
the second communication device comprises:
a second-communication-device holder that holds the identification information acquired from the identification devices by the second communication device as a second-communication-device acquisition information; and
a second-communication-device transmitter that transmits the second-communication-device acquisition information to the first communication device, and
the first communication device comprises:
a frst-communication-device holder that holds the identification information acquired from the identification devices by the first communication device and the second-communication-device acquisition information received from the second communication device as first-communication-device acquisition information; and
a first-communication-device transmitter that transmits the first-communication-dcvice acquisition information to the processor,
the processor outputs the first-communication-device acquisition information to the management server, and
the management server judges whether or not the identification information having the same contents is contained in the first-communication-device acquisition information, and when the management server judges that identification information having the same contents is contained, the management server merges the identification information judged to have the same contents.
